# EUROPEAN PATENT APPLICATION

(11) **EP 4 438 892 A1**
(43) Date of publication of application: **02.10.2024**
(21) Application number: 23165980.6
(22) Date of filing: 31.03.2023
(51) Int. Cl.: F03D 13/10, F03D 13/40

(54) **CLAMPING ASSEMBLY**

(71) Applicant: Siemens Gamesa Renewable Energy A/S, 7330 Brande (DK)
(72) Inventor: Saarup, Henrik Fredsøe, 9280 Storvorde (DK)
(74) Representative: SGRE-Association

(57) **Abstract**

Clamping assembly (3) for clamping a handling device to a wind turbine blade (1), preferably to a root section (4) of a wind turbine blade (1), the clamping assembly (3) comprising:
an inner ring (5),
a first outer clamping ring (6) and a second outer clamping ring (7) arranged respectively on a first side (8) and on a second side (9) of the inner ring (5) in an axial direction (Y) of the inner ring (5),
wherein the first outer clamping ring (6) and the second outer clamping ring (7) are clampable on an outer surface (2) of the wind turbine blade (1), and
locking means (18) for locking the inner ring (5) with the first outer clamping ring (6) and the second outer clamping ring (7).

## Description

### Field of invention

The present invention relates to a clamping assembly for clamping a handling device to a wind turbine blade, in particular to a root section of a wind turbine blade.

Thus, the present invention may relate to the technical field of devices used during the manufacturing and the installation of wind turbine blades.

### Art Background

Handling, transporting and storing wind turbine blades is getting more and more difficult during the manufacturing and installation process, due to the steadily increasing sizes of the wind turbine blades, which lead to increased weights, torques, shear, bending and skew moments. Therefore, handling a wind turbine blade during the manufacturing and the installation process puts the wind turbine blade and the machinery itself under extreme stress conditions.

For example, rotating wind turbine blades, during the manufacturing and installation process, is now done by using either a tip turning technique or a root turning technique. In the tip turning technique, the tip of the wind turbine blade is grasped by a tip turner, which then drives the whole blade. In the root turning technique, a root turner, comprising rollers being in contact with an external surface of the wind turbine blade, is used. The rolling of the rollers then rotates the whole wind turbine blade.

Both techniques have some disadvantages. For example, the tip turning technique is a challenge for the mechanical integrity of the blade tip, due to the reduced tip sizes and the needed torque to rotate the whole blade. On the other hand, the root turning technique stresses the machinery, which has to deliver high torques for rotating the wind turbine blade, due to the friction between the rollers and the surface of the wind turbine blade. Also, another problem that may be rising, is that the required friction needed for holding the blade into position can be reduced by dust, moist, aging or other, then resulting in a HSE hazard if the blade rotates uncontrollable.

### Summary of the invention

There may be a need for handling a wind turbine blade during the manufacturing and installation process by means of an assembly that is overcoming the disadvantages of the state of the art, in particular the high stresses to which the wind turbine blade undergoes during handling.

A clamping assembly for clamping a handling device to the wind turbine blade is provided.

According to an aspect of the invention, the clamping assembly for clamping a handling device to a wind turbine blade comprises an inner ring, a first outer clamping ring and a second outer clamping ring and locking means, wherein the first outer clamping ring and the second outer clamping ring are clampable on an outer surface of the wind turbine blade. The first outer clamping ring and the second outer clamping ring are arranged respectively on a first side and on a second side of the inner ring in an axial direction of the inner ring, wherein the first side and the second side are opposite to each other. The locking means are configured for locking the inner ring with the first outer clamping ring and the second outer clamping ring.

According to the present invention, the terms "inner ring", "first outer clamping ring" and "second outer clamping ring" refer to ring shaped elements, which have preferably a regular shaped form, but which can also have other forms, such as an oval one.

Preferably the clamping assembly is used for clamping the handling device to a root section of a wind turbine blade. A root section might be defined as a portion of the wind turbine blade having a circular form.

The present invention is therefore based on the idea of loosely placing the inner ring around the wind turbine blade and then to block it by means of the first outer clamping ring and the second outer clamping ring, which are clamped to the outer surface of the wind turbine blade.

In such a way, it is possible to clamp or to arrange a handling device for handling the wind turbine blade during manufacturing and installation in a safe and quick manner.

On top of that, the first outer clamping ring and the second outer clamping ring are advantageous as they are fixed with respect to the wind turbine blade, once they are clamped to the outer surface of the wind turbine blade, so that no relative movement between the clamping assembly and the wind turbine blade is present when the wind turbine blade is handled, which results in the need for reduced torques during handling if compared to root turners.

In present invention, clamping to the outer surface of the wind turbine blade might be realized by means of clamping elements having a first position, in which the first outer clamping ring and the second outer clamping ring are not clamped to the outer surface of the wind turbine blade, and a second position, in which the first outer clamping ring and the second outer clamping ring are clamped to the outer surface of the wind turbine blade. The clamping element might a suction cup. The clamping element might also be a clamping lever, which causes, in a first position, the first outer clamping ring and the second outer clamping ring, to be loosely placed around the wind turbine blade surface and, in a second position, the first outer clamping ring and the second outer clamping ring, to close around the wind turbine blade surface.

The invention also comprises the case in which each of the first outer clamping ring and the second outer clamping ring has at least one clamping element.

In the present invention, the locking means might be a pin, a bolt connection comprising a screw and a nut, a rivet of the like.

### Exemplary Embodiments

According to an embodiment, the inner ring comprises at least one first through hole, the first outer clamping ring comprises at least one second through hole and the second outer clamping ring comprises at least one third through hole, wherein the first through hole, the second through hole and the third through hole are coaxially aligned with one another and the locking means is arranged in the first through hole, the second through hole and the third through hole.

In such a way, an easy locking of the inner ring with the first outer clamping ring and the second outer clamping ring is possible.

In an embodiment, the locking means is a bolt comprising a screw and a nut. In another embodiment, the locking means is a ring.

In an embodiment, one of the second through hole and the third through hole is a threaded hole. In such a way, it is possible to use a screw being inserted from either the second through hole or the third through hole and being screwed to the other one of the second through hole and the third through hole, so that there is no need for a nut and the locking of the inner ring with the first outer clamping ring and the second outer clamping ring can be further simplified.

According to an embodiment, the clamping assembly further comprises a fixation enhancement element arranged at an inner surface of at least one of the inner ring, the first outer clamping ring and the second outer clamping ring in a radial direction of the inner ring.

The fixation enhancement element is a part being placed at an inner surface of the clamping assembly in a radial direction of the inner ring, wherein the fixation enhancement element has the function of increasing the clamping effect of the first outer clamping ring and the second outer clamping ring on the outer surface of the wind turbine blade.

Another advantage of using a fixation enhancement element is the possibility of interposing an element with a material protecting the outer surface of the wind turbine blade, thus reducing the risk that the clamping assembly damages the outer surface of the wind turbine blade.

According to an embodiment, the fixation enhancement element comprises a wedge-shaped element arranged at an inner surface of at least one of the first outer clamping ring and the second outer clamping ring in a radial direction of the inner ring, wherein the inner surface at which the fixation enhancement element is arranged has a corresponding form.

In such a way, it is therefore possible that when the first outer clamping ring, the inner ring and the second outer clamping ring are locked together, an axial locking force of the clamping assembly in an axial direction of the inner ring is transformed in a clamping force of the clamping assembly in a radial direction of the inner ring. A simple way for locking the inner ring with the first outer clamping ring and the second outer clamping ring might therefore be provided. According to an embodiment, the fixation enhancement element is made of or comprises polyurethane or ethylene propylene diene monomer rubber. Such materials have the double advantage of, on the one side, protecting the outer surface of the wind turbine blade when the clamping assembly is clamped on the outer surface of the wind turbine blade and, on the other side, to increase the clamping force of the first outer clamping ring and the second outer clamping ring due to the material properties.

It might also be the case, that the fixation enhancement element comprises a core made of a metallic material and outer elements forming the contact surfaces with the outer surface of the wind turbine blade and the inner surface of at least one of the inner ring, the first outer clamping ring and the second outer clamping ring in a radial direction of the inner ring, wherein the outer elements are made of or comprise polyurethane or ethylene propylene diene monomer rubber.

In such a way, the fixation enhancement element has an improved mechanical stability.

According to an embodiment, the fixation enhancement element comprises circumferential segments being spaced apart from each other. In such a way, it is possible to reduce the amount of the outer surface of the wind turbine blade being clamped, thus reducing the risk of damaging the outer surface of the wind turbine blade.

According to an embodiment, the circumferential segments are distributed regularly over the whole inner surface of at least one of the inner ring, the first outer clamping ring and the second outer clamping ring. Therefore, a more uniform distribution of the clamping force between the first outer clamping ring and the second outer clamping ring can be reached.

According to an embodiment, the inner ring comprises at least two inner ring segments. In such a way, it is possible to mount the inner ring can be arranged more easily.

According to an embodiment, the inner ring comprises three or more inner ring segments, wherein all of the ring segments have the same dimensions. The inner rings are therefore interchangeable between each other. Also, it is possible to directly attach a handling device with an inner ring segment, so that the inner ring segment comprises a handling device, being preferably reversibly fixed to the inner ring segment, so that when the handling device must be changed, for example from a lifting eye to a bracket or a sprocket, another inner ring segment with a second handling device can be placed in lieu of the inner ring segment. Therefore, the switching time between different handling devices can be improved.

According to an embodiment, a first inner ring segment comprises a coupling element abutting from a surface of the first inner ring segment and a second inner ring segment comprises a receiving portion for receiving the coupling element. In such a way, easy and fast means for fixing the inner ring segments to one another can be provided.

According to an embodiment, the coupling element and the receiving portion form a dovetail connection. A dovetail connection is a mechanically stable and easy to realize connection between the different inner ring segments.

According to an embodiment, the coupling element comprises a fourth through hole and the second inner ring segment comprises a fifth through hole, wherein the fourth through hole and the fifth through hole are coaxially aligned with each other when the coupling element is received in the receiving portion and an inner ring fixing means is provided in the fourth through hole and the fifth through hole for fixing the first inner ring segment and the second inner ring segment with each other. Therefore, an inner ring fixing means, such as a pin, a screw or a rivet, can be used to improve the stability of the connection between the first inner ring segment and the second inner segment.

According to an embodiment, at least one of the first outer clamping ring and the second outer clamping ring comprises at least two outer clamping ring segments.

According to an embodiment, both the first outer clamping ring and the second outer clamping ring comprise at least two outer clamping ring segments, preferably at least three outer clamping ring segments. Of course, the first outer clamping ring and the second outer clamping ring may comprise a different number of outer clamping ring segments the one from the other.

According to an embodiment, it the first outer clamping ring or the second outer clamping ring comprises two or more outer clamping ring segments, the outer clamping ring segments have all the same dimension, so that they are interchangeable with one another.

According to an embodiment, a first outer clamping ring segment comprises a coupling element abutting from a surface of the first outer clamping ring segment and a second outer clamping ring segment comprises a receiving portion for receiving the coupling element.

According to an embodiment, the clamping assembly comprises at least one of the following features:
the coupling element and the receiving portion form a dovetail connection;
the coupling element comprises a sixth through hole and the second outer clamping ring segment comprises a seventh through hole, wherein the sixth through hole and the seventh through hole are coaxially aligned with each other when the coupling element is received in the receiving portion and an outer clamping ring fixing means is provided in the sixth through hole and the seventh through hole for fixing the first outer clamping ring segment and the second outer clamping ring segment with each other.

According to an embodiment, the inner ring comprises at least one handling means fixing element for fixing handling means to the inner ring. Therefore, it is possible to fix a handling means, such a bracket, a sprocket or a lifting eye, to the inner ring and to perform a certain operation on the wind turbine blade.

According to an embodiment, the handling means fixing element is a threaded hole. Therefore, a fast an easy way for reliably fixing the handlings means can be provided.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

- Figure 1: shows a wind turbine blade and on the outer surface of this wind turbine blade, a clamping assembly according to the invention
- Figure 2: shows a clamping assembly according to the invention arranged and clamped on the outer surface of a wind turbine blade
- Figure 3: shows a section of an inner ring according to an embodiment of the invention
- Figure 4: shows a detailed view of a first inner ring segment according to an embodiment of the invention
- Figure 5: shows a second inner ring segment in addition to the first inner ring segment shown in Figure 4
- Figure 6: shows an embodiment of the invention, wherein the second outer clamping ring comprises two clamping ring segments which are connected to each other
- Figure 7: shows an embodiment of the invention comprising an inner ring, first and second outer clamping rings and a fixation enhancement element, wherein the inner ring, the clamping rings and the fixation enhancement element are arranged on the outer surface of a wind turbine blade but not yet locked
- Figure 8: shows an embodiment of the invention comprising a locking means

### Detailed Description of the Drawings

The illustration in the drawing is schematic. It is noted that in different figures, similar or identical elements or features are provided with the same reference signs or with reference signs, which are different from the corresponding reference signs only within the first digit. In order to avoid unnecessary repetitions elements or features which have already been elucidated with respect to a previously described embodiment are not elucidated again at a later position of the description.

Further, spatially relative terms, such as "front" and "back", "above" and "below", "left" and "right", et cetera are used to describe an element's relationship to another element or to other elements as illustrated in the figures. Thus, the spatially relative terms may apply to orientations in use which differ from the orientation depicted in the figures. Obviously, all such spatially relative terms refer to the orientation shown in the figures only for ease of description and are not necessarily limiting as an apparatus according to an embodiment of the invention can assume orientations different than those illustrated in the figures when in use.

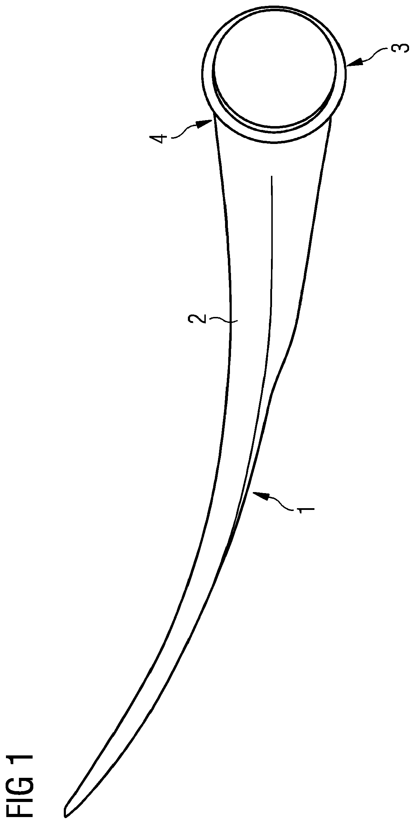

**Figure 1** shows a wind turbine blade 1, on which outer surface 2 a clamping assembly 3 according to the present invention is positioned.

The clamping assembly 3 is clamped at a root region 4 of the wind turbine blade 1. The clamping assembly 3 is used for clamping a handling device, such as a lifting eye, a sprocket or a bracket, to the wind turbine blade 1.

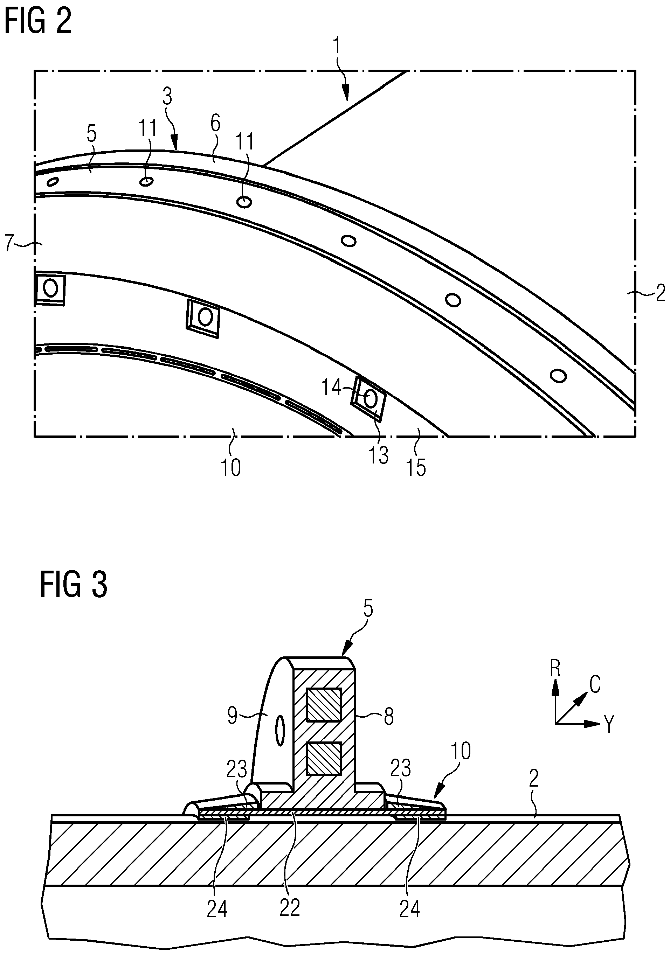

**Figure 2** shows in greater detail the clamping assembly 3 as it is arranged and clamped on the outer surface 2 of the wind turbine blade 1.

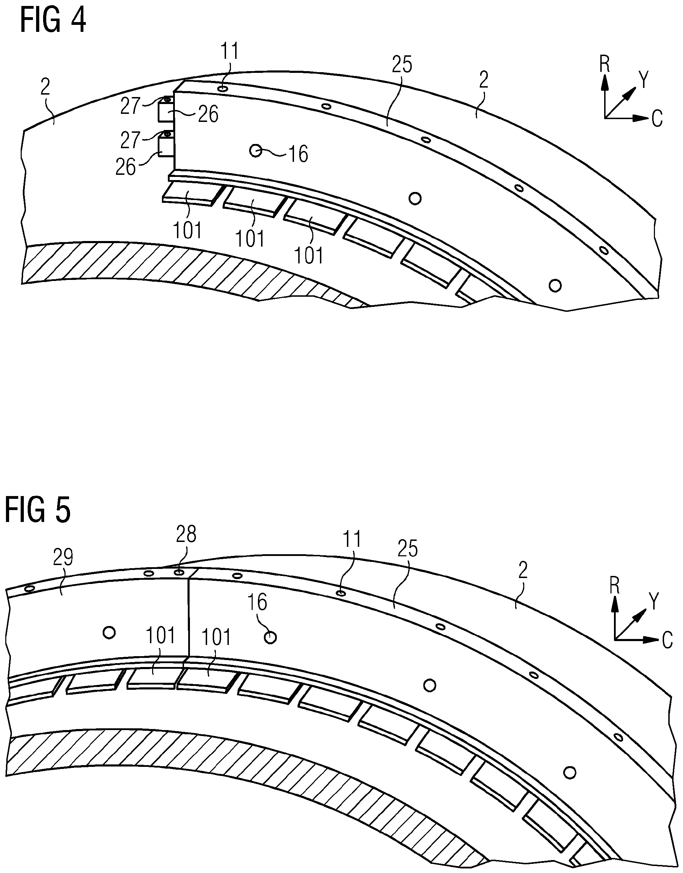

The clamping assembly 3 comprises an inner ring 5, a first outer clamping ring 6 and a second outer clamping ring 7. The first outer clamping ring 6 and the second outer clamping ring 7 are arranged at a first side 8 and at a second side 9 (**Figure 4**) of the inner ring 5, whereby the first side 8 and the second side 9 of the inner ring 5 are opposite to each other in an axial direction Y of the inner ring 5 (see also **Figure 3**). In other words, the inner ring 5 is sandwiched in an axial direction Y of the inner ring 5 between the first outer clamping ring 6 and the second outer clamping ring 7.

The clamping assembly according 3 of **Figure 2** comprises also a fixation enhancement element 10, which shall be described in further detail later on, which is configured to increase the clamping force between the first outer clamping ring 6 and the second outer clamping ring 7 on the one side and the outer surface 2 of the wind turbine 1 on the other side.

The inner ring 5 comprises a plurality of handling means fixing elements 11 for fixing handling means to the inner ring 5. The handling means fixing elements 11 are in **Figure 2** holes, preferably threaded holes, in which pins or screws might be inserted for fixing the handling means.

The second outer clamping ring 7 comprises third through holes 14 placed in recesses 13 of an outer circumferential surface 15 of the second outer clamping ring 7. Similar second through holes are comprised in the first outer clamping ring 6, though not shown in **Figure 2****.** Furthermore, as shown for example in **Figure 4****,** the inner ring 5 also comprises first through holes 16.

The inner ring 5, the first outer clamping ring 6 and the second outer clamping ring 7 are placed in such a way the first through holes 16, the second through holes and the third through holes 13 are coaxially aligned, so that a locking means 18, for example a screw comprising a head section 19 connected to a stem 20 with a threaded portion 21 on an opposite side of the stem 20 with respect to the head 19, can be arranged in the first through hole 16, the second through hole and the third through hole 14 for locking the inner ring 5 with the first outer clamping ring 6 and the second outer clamping ring 7.

In a preferred embodiment, the second through hole or the third through hole 14 are threaded, so that the locking means 18 in form of a screw can be directly fixed inside of one of the outer clamping rings 6, 7 and thus lock the inner ring 5 with the first outer clamping ring 6 and the second outer clamping ring 7.

In another embodiment, a nut (not shown) is used for locking the locking the screw 18.

In yet another embodiment, other locking means, such as a pin or a rivet (not shown) can be used as locking means.

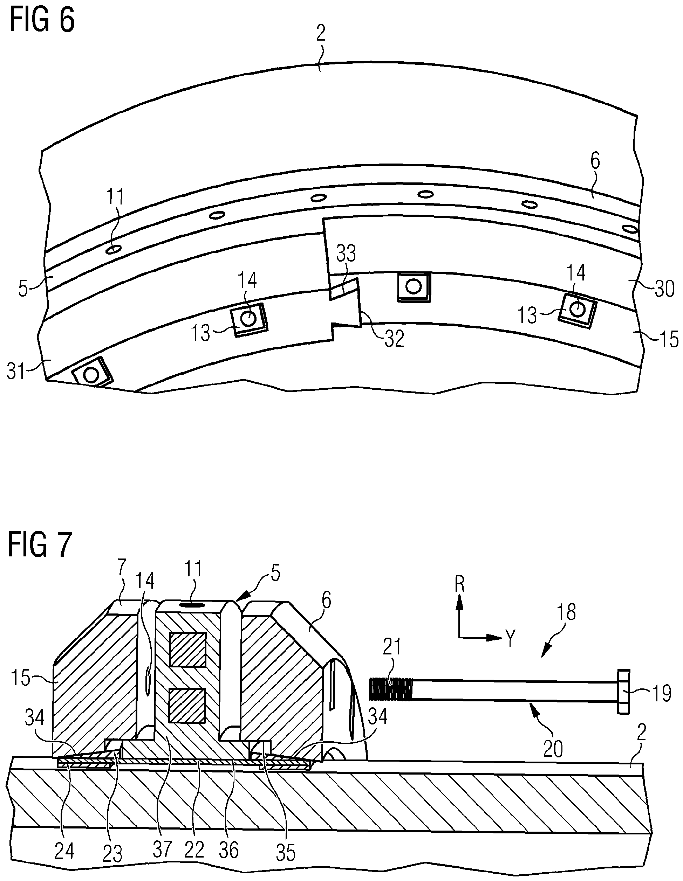

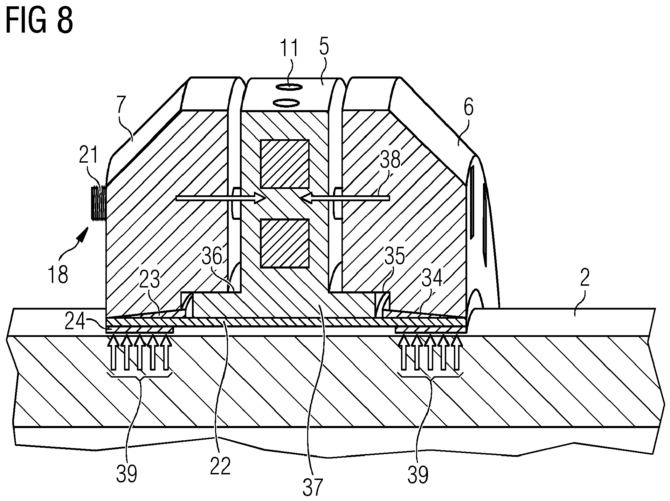

**Figure 3** represent a section of the inner ring 5 along a circumferential direction C of the inner ring 5. In **Figure 3** it is shown that the fixation enhancement element 10 comprises a rigid core 22, which is arranged at an inner surface 17 in a radial direction R of the inner ring 5, wedge-shaped elements 23 arranged at inner surfaces in a radial direction R of the first outer clamping ring 6 and the second outer clamping ring 7 (see **Figure 7** and **8**) and outer elements 24, which are in contact with the outer surface 2 of the wind turbine blade 1 and which are configured for transmitting the clamping force of the first outer clamping ring 6 and the second outer clamping ring 7.

In the present embodiments, both the wedge-shaped elements 23 and the outer elements 24 are made of or comprise polyurethane or ethylene propylene diene monomer rubber.

**Figure 4** shows a detailed view of a first inner ring segment 25 forming the inner ring 5. The first inner ring segment 25 comprises coupling elements 26, which are abutting from a surface of the first inner ring segment 25.

As shown in **Figure 5**, a second inner ring segment 29 comprises receiving portion (not shown) for receiving the coupling elements 26 of the first inner ring segment 25. The coupling elements 26 of the first inner ring segment 25 and the second inner ring segment 29 comprise respectively fourth and fifth through holes 27 and 28, which are coaxially aligned, when the coupling elements 26 are received in the receiving portion, so that an inner ring fixing means (not shown), such as a screw or a pin might be inserted in the fourth and the fifth through holes 27, 28 for fixing the first inner ring segment 25 and the second inner ring segment 29 one to the other.

Though not shown in **Figures 4** and **5**, the coupling elements 26 and the receiving section may form a dovetail connection.

As shown in **Figures 4** and **5**, the fixation enhancement element 10 is divided into circumferential segments 101, wherein any two consecutive circumferential segments 101 are equally spaced and wherein each circumferential segment 101 spans an equal angle.

**Figure 6** shows an embodiment, in which the second outer clamping ring 7 comprises a first outer clamping ring segment 31 and a second outer clamping ring segment 30. The second outer ring clamping ring segment 30 comprises a receiving section 32 and the first outer clamping ring 31 comprises a coupling element 33, whereby when the coupling element 33 is received in the receiving section 32 they form a dovetail connection.

Though not shown in **Figure 6**, the coupling element 33 comprises a sixth through hole and the second outer clamping ring segment 30 comprises a seventh through hole, wherein the sixth through hole and the seventh through hole are coaxially aligned with each other when the coupling element 33 is received in the receiving portion 32 and an outer clamping ring fixing means is provided in the sixth through hole and the seventh through hole for fixing the first outer clamping ring segment 31 and the second outer clamping ring segment 30 with each other.

**Figure 7** shows an exemplary embodiment of the invention according to the previous figures, in a state in which the inner ring 5, the first outer clamping ring 6 and the second outer clamping ring 7, together with the fixation enhancement element 10, are placed onto the outer surface 2 of the wind turbine blade 1, but the inner ring, the first outer clamping ring 6 and the second outer clamping ring 7 are not yet locked by using the locking means 18.

According to **Figure 7**, the inner ring 5 comprises a base 37 having mating surfaces 36, which couple with mating surfaces 35 of the first outer clamping ring 6 and the second outer clamping ring 7. Also, the first outer clamping ring 6 and the second outer clamping ring 7 have inner surfaces 34, which have a form corresponding to the wedge-shaped elements 23 of the fixation enhancement element 10.

Upon inserting the locking means 18, here a screw, in the first through hole 16, the second through hole and the third through hole 14, which is threaded.

By screwing the screw 18, the inner 5, the first outer clamping ring 6 and the second outer clamping ring 7 are pushed together. The inner surfaces 34 mate with the wedge elements 23 of the fixation enhancement element 10, so that an axial force 38 is transformed into a clamping force 39 (**Figure 8**). In such an embodiment, therefore, the locking means 18 are also clamping means.

The mating surfaces 36 of the base 37 of the fixation enhancement element 10 and the mating surface 35 of the first outer clamping ring 6 and the second outer clamping ring 7 also come in contact, so that the inner ring 5 is reliably held in a stable manner onto the outer surface 2 of the wind turbine blade 1.

Independent of the grammatical term usage, individuals with male, female or other gender identities are included within the term.

## Claims

1. Clamping assembly (3) for clamping a handling device to a wind turbine blade (1), preferably to a root section (4) of a wind turbine blade (1), the clamping assembly (3) comprising:
an inner ring (5),
a first outer clamping ring (6) and a second outer clamping ring (7) arranged respectively on a first side (8) and on a second side (9) of the inner ring (5) in an axial direction (Y) of the inner ring (5),
wherein the first outer clamping ring (6) and the second outer clamping ring (7) are clampable on an outer surface (2) of the wind turbine blade (1), and
locking means (18) for locking the inner ring (5) with the first outer clamping ring (6) and the second outer clamping ring (7).

2. Clamping assembly (3) according to claim 1, wherein
the inner ring (5) comprises at least one first through hole (16), the first outer clamping ring (6) comprises at least one second through hole and the second outer clamping ring (7) comprises at least one third through hole (14),
wherein the first through hole (16), the second through hole and the third through hole (14) are coaxially aligned with one another, and
the locking means (18) is arranged in the first through hole (16), the second through hole and the third through hole (14), wherein it is preferably provided that the second through hole or the third through hole (14) is a threaded hole.

3. Clamping assembly (3) according to claim 1 or 2, wherein the clamping assembly (3) further comprises a fixation enhancement element (10) arranged at an inner surface (17) of at least one of the inner ring (5), the first outer clamping ring (6) and the second outer clamping ring (7) in a radial direction (R) of the inner ring (5).

4. Clamping assembly (3) according to claim 3, wherein the fixation enhancement element (10) comprises a wedge-shaped element (23) arranged at an inner surface (34) of at least one of the first outer clamping ring (6) and the second outer clamping ring (7) in a radial direction (R) of the inner ring (5),
wherein the inner surface (34) at which the fixation enhancement element (10) is arranged has a corresponding form, so that when the first outer clamping ring (5), the inner ring (6) and the second outer clamping ring (7) are locked together, an axial locking force (38) of the clamping assembly (3) in an axial direction (Y) of the inner ring (5) is transformed in a clamping force (39) of the clamping assembly (3) in a radial direction (R) of the inner ring (5).

5. Clamping assembly (3) according to claim 3 or 4, wherein the fixation enhancement element (10) is made of or comprises polyurethane or ethylene propylene diene monomer rubber.

6. Clamping assembly (3) according to any one of claims 3 to 5, wherein the fixation enhancement element (10) comprises circumferential segments (101) being spaced apart from each other.

7. Clamping assembly (3) according to claim 6, wherein the circumferential segments (101) are distributed regularly over the whole inner surface (17) of at least one of the inner ring (5), the first outer clamping ring (6) and the second outer clamping ring (7).

8. Clamping assembly (3) according to any of claims 1 to 7, wherein the inner ring (5) comprises at least two inner ring segments (25, 29).

9. Clamping assembly (3) according to claim 8, wherein
a first inner ring segment (25) comprises a coupling element (26) abutting from a surface of the first inner ring segment (25),
and a second inner ring segment (29) comprises a receiving portion for receiving the coupling element (26).

10. Clamping assembly according (3) to claim 9, comprising at least one of the following features:
the coupling element (26) and the receiving portion form a dovetail connection;
the coupling element (26) comprises a fourth through hole (27) and the second inner ring segment (29) comprises a fifth through hole (28), wherein the fourth through hole (27) and the fifth through hole (28) are coaxially aligned with each other when the coupling element (26) is received in the receiving portion and an inner ring fixing means is provided in the fourth through hole (27) and the fifth through hole (28) for fixing the first inner ring segment (25) and the second inner ring segment (29) with each other.

11. Clamping assembly (3) according to any of claims 1 to 10, wherein at least one of the first outer clamping ring (6) and the second outer clamping ring (7) comprises at least two outer clamping ring segments (30, 31).

12. Clamping assembly (3) according to claim 11, wherein
a first outer clamping ring segment (31) comprises a coupling element (33) abutting from a surface of the first outer clamping ring segment (31),
and a second outer clamping ring (30) segment comprises a receiving portion (32) for receiving the coupling element (33) .

13. Clamping assembly (3) according to claim 12, comprising at least one of the following features:
the coupling element (33) and the receiving portion (32) form a dovetail connection;
the coupling element (33) comprises a sixth through hole and the second outer clamping ring segment (30) comprises a seventh through hole, wherein the sixth through hole and the seventh through hole are coaxially aligned with each other when the coupling element (33) is received in the receiving portion (32) and an outer clamping ring fixing means is provided in the sixth through hole and the seventh through hole for fixing the first outer clamping ring segment (31) and the second outer clamping ring segment (30) with each other.

14. Clamping assembly (3) according to any of claims 1 to 13, wherein the inner ring (5) comprises at least one handling means fixing element (11) for fixing handling means to the inner ring.

15. Clamping assembly (3) according to claim 14, wherein the handling means fixing element (11) is a threaded hole.
